# EUROPÄISCHE PATENTSCHRIFT

(11) **EP 3 189 108 B1**
(45) Veröffentlichungstag und Bekanntmachung des Hinweises auf die Patenterteilung: **12.02.2020**
(21) Anmeldenummer: 15766748.6
(22) Anmeldetag: 29.08.2015
(51) Int. Cl.: C09D 13/00

(54) **MINE FÜR SCHREIB-, ZEICHEN- UND/ODER MALGERÄTE**
LEAD FOR WRITING, DRAWING AND/OR PAINTING UTENSILS
MINE POUR INSTRUMENT D'ÉCRITURE, DE DESSIN ET/OU DE PEINTURE

(30) Priorität: 06.09.2014 DE 102014013200
(43) Veröffentlichungstag der Anmeldung: 12.07.2017
(73) Patentinhaber: STAEDTLER Mars GmbH & Co. KG, 90427 Nürnberg (DE)
(72) Erfinder: DELAPIERRE, Christine, 91074 Herzogenaurach (DE); LEHRER, Claudia, 92318 Neumarkt (DE)
(86) Internationale Anmeldenummer: PCT/EP2015/001757
(87) Internationale Veröffentlichungsnummer: WO 2016/034277

(56) Entgegenhaltungen:
- DE-A1- 4 332 582
- DE-C1- 3 835 241
- US-A- 316 373
- US-A1- 2002 195 021
- US-A1- 2013 330 112

## Beschreibung

Die Erfindung betrifft Minen für Schreib-, Zeichen- und/oder Malgeräte nach dem Oberbegriff des Anspruch 1.

Minen auf Basis von Ton und Graphit zum Schreiben und/oder Malen sind prinzipiell bekannt. Derartige Minen nach dem Stand der Technik können Zusatzstoffe enthalten wie beispielsweise Talk als Füllstoff.

So ist beispielsweise aus der DE 3835241 C1 ein Verfahren zur Herstellung von gebrannten Bleistiftminen bekannt. Derartige Minen beinhalten 15 bis 70 Gew.% Graphitpulver, 3 bis 30 Gew.% Tonmehl, Wasser und ggf. weitere Zusatzstoffe.

Bei derartigen Minen ist bekannt, dass das Verhältnis von Graphit zu Ton den Härtegrad der Minen bestimmt. Der Abrieb der Mine wiederum hängt direkt mit dem Härtegrad der Mine zusammen. Beispielsweise weist eine weiche Mine einen höheren Abrieb auf, was auch zu einem satten und deckenden Anstrich führt. Weiche Minen mit einem hohen Abrieb enthalten in der Regel einen höheren Anteil an Graphit wie härtere Minen.
Nachteilig bei derartigen Minen ist es, dass die Kosten für Minen mit hohem Anteil an Graphit steigen. Zudem ist es als nachteilig anzusehen, dass weiche Minen die einen satten und kräftigen Abstrich auf dem Auftragsmedium hinterlassen weniger gut zum Schreiben geeignet sind.

**Aufgabe** der Erfindung ist es daher, Minen zum Schreiben, Zeichnen und/oder Malen zu schaffen, die insbesondere kostengünstig herstellbar sind, die trotz kostengünstiger Herstellung einen kleinen Zuwachs an Biegebruchfestigkeit aufweisen und mit denen sich ein Abstrich mit hohem Schwärzungsgrad erzeugen lässt. Zudem ist es Aufgabe der Erfindung, Minen zu schaffen, welche bei gleicher Härte bzw. gleichem Härtegrad einen unterschiedlichen Abrieb aufweisen.

Diese Aufgabe wird durch eine Minenzusammensetzung gemäß Anspruch 1 gelöst, indem der Anteil von Graphit, in auf Ton basierenden Minenzusammensetzungen, durch einen nicht sinternden silikatischen Füllstoff ersetzt wird. Auf diese Weise wurden Minen geschaffen, die aufgrund reduzierter Rohstoffkosten kostengünstig herstellbar sind. Zudem hat sich in überraschender Weise gezeigt, dass erfindungsgemäß ausgestaltete Minen geringfügig bruchfester sind und zudem einen Abstrich mit einem höheren Schwärzungsgrad aufweisen. Der Abrieb der Mine kann unabhängig von der Härte bzw. Härtegrad der Mine eingestellt werden.

Eine derartige Mine für Schreib-, Zeichen- und/oder Malgeräte weist mindestens ein Bindemittel in Form von Ton auf, weist mindestens einen nicht sinternden silikatischen Füllstoff auf, der als Speckstein ausgebildet ist und weist mindestens Graphit als farbgebendes Mittel auf.

Zur genaueren Darstellung der erfindungsgemäßen Mine seien zwei Rahmenbeispiele für deren Zusammensetzung angeführt.

**Eine Mine weist gemäß Rahmenbeispiel 1**

| | |
|---|---|
| 45 bis 68 Gew.-% | Graphit |
| 5 bis 20 Gew.-% | Speckstein |
| 20 bis 40 Gew.-% | Ton |
| 3 bis 8 Gew.% | Hilfsstoffe |

auf.

**Insbesondere ist es bevorzugt, wenn die Mine nach Rahmenbeispiel 2**

| | |
|---|---|
| 49 bis 65 Gew.-% | Graphit |
| 5 bis 15Gew.-% | Speckstein |
| 25 bis 35 Gew.-% | Ton |
| 1 bis 5 Gew.% | Hilfsstoffe |

beinhaltet.

Anhand der nachfolgenden Rezepturbeispiele soll die erfindungsgemäße Mine beispielhaft dargestellt werden.

**Beispielrezeptur 1 für eine Bleistiftmine umfasst:**

| | |
|---|---|
| Graphit | 61 Gew.% |
| Speckstein | 7 Gew. % |
| Ton | 30 Gew. % |
| Hilfsmittel 1 | 1,5 Gew.% |
| Hilfsmittel 2 | 0,5 Gew.% |

**Beispielrezeptur 2 für eine Bleistiftmine umfasst:**

| | |
|---|---|
| Graphit | 54 Gew.% |
| Speckstein | 14 Gew.% |
| Ton | 30 Gew. % |
| Hilfsmittel 1 | 1,5 Gew.% |
| Hilfsmittel 2 | 0,5 Gew.% |

Das mindestens eine Bindemittel liegt als Ton vor.

Neben dem in den Beispielen eingesetzten Speckstein als nicht sinterndem silikatischen Füllstoff, auch bekannt unter Talk, dessen Hauptbestandteil Magnesit ist, können weitere Füllstoffe wie beispielsweise hexagonales Bornitrid, Schichtsilikate, Kreide, Schwerspat, bunte Pigmente und/oder unbunte Pigmente Verwendung finden.

Als Farbmittel für derartige Bleistiftminen, wird wie in den Beispielen dargestellt, Graphit eingesetzt. Als weitere Farbmittel kann um nur ein Beispiel zu nennen Ruß eingesetzt werden.
Als Hilfsmittel 1 sei beispielhaft Natriumcarbonat genannt.
Hilfsmittel 2 kann beispielsweise als Polyphosphat vorliegen.

In der nachfolgenden **Tabelle** wurden die Biegebruchfestigkeiten und der Minenabrieb von Minen nach dem Rezepturbeispiel 1, Rezepturbeispiel 2 und einem Vergleichsbeispiel dargestellt.

**Vergleichsbeispiel eine Mine nach dem Stand der Technik:**

| | |
|---|---|
| Graphit | 68 Gew.-% |
| Ton | 30 Gew. % |
| Hilfsmittel 1 | 1,5 Gew.% |
| Hilfsmittel 2 | 0,5 Gew.% |

| | Mine nach Rezeptur 1 | Mine nach Rezeptur 2 | Mine gemäß Vergleichsbeispiel |
|---|---|---|---|
| Biegebruchfestigkeit (MPa)-Mittelwert | 45-60 | 45-60 | 45-55 |
| Abrieb (mm) | 2,66 | 3,65 | 1,71 |
| Härte/Härtegrad | 2B | 2B | 2B |

Aus der Tabelle ist zu erkennen, dass der Abrieb einer Mine nach der vorliegenden Erfindung, bei der ein Teil des Graphitanteiles durch Speckstein ersetzt wird, höher oder geringer eingestellt werden kann, ohne dabei die Minenhärte zu verändern. Das bedeutet, dass über den Gehalt an Speckstein in der Mine der Abrieb und damit die Schreiblänge eingestellt werden kann.

Es hat sich zudem gezeigt, dass der Minendurchmesser bei Minen mit erfindungsgemäßer Zusammensetzung ohne Verlust der Biegebruchfestigkeit reduziert werden kann.

Die erfindungsgemäßen Minen werden nach folgendem Verfahren hergestellt:
1. Schritt: Mischen aller Rezepturbestandteile im Mischer zu Granulat
2. Schritt: Pressen des Granulates zu Minen
3. Schritt: Trocknung der Minen unter erhöhter Temperatur, Bereich von 140 bis 200°C.
4. Schritt: Brennen der Mine bei Temperaturen von 900 bis 1000°C

Bei den so hergestellten Minen kann eine nachgeschalte Imprägnierung entfallen, was die Herstellung kostengünstiger gestaltet.
Minen nach dem Stand der Technik mussten beispielsweise mit Wachs in einem zusätzlichen Arbeitsschritt imprägniert werden, um einen gewünschten Schwärzungsgrad zu erreichen. Es hat sich gezeigt, dass der Schwärzungsgrad der Minen nach der erfindungsgemäßen Zusammensetzung auch ohne Imprägnierung genügend hoch ist.

## Patentansprüche

1. **Gebrannte Mine** für Schreib-, Zeichen- und/oder Malgeräte, bestehend mindestens aus Bindemittel, Füllstoff und farbgebendem Mittel, wobei das Bindemittel als Ton vorliegt und wobei das farbgebende Mittel Graphit ist,
**dadurch gekennzeichnet,**
**dass** der Füllstoff als ein nicht sinternder silikatischer Füllstoff ausgebildet ist,
**dass** der nicht sinternde silikatische Füllstoff als Speckstein ausgebildet ist
**und dass** die Mine einen Gehalt von
| | |
|---|---|
| 45 bis 68 Gew.-% | Graphit |
| 5 bis 20 Gew.-% | Speckstein |
| 20 bis 40 Gew.-% | Ton |
| 3 bis 8 Gew.-% | Hilfsstoffe |
aufweist.

2. **Mine** nach Anspruch 1,
**dadurch gekennzeichnet,**
**dass** die Mine bevorzugt
| | |
|---|---|
| 49 bis 65 Gew.-% | Graphit |
| 5 bis 15 Gew.-% | Speckstein |
| 25 bis 35 Gew.-% | Ton |
| 1 bis 5 Gew.-% | Hilfsstoffe |
aufweist.

## Claims

1. Baked core for writing, drawing and/or colouring instruments, consisting at least of binder, filler and colour-imparting medium, wherein the binder is present as clay and wherein the colour-imparting medium is graphite,
**characterised in that**
the filler has the form of a non-sintered siliceous filler,
the non-sintered siliceous filler has the form of soapstone
and the core has a content of:
| | |
|---|---|
| 45 to 68 weight % | graphite |
| 5 to 20 weight % | soapstone |
| 20 to 40 weight % | clay |
| 3 to 8 weight % | additives |

2. Core according to claim 1,
**characterised in that**
the core preferably comprises:
| | |
|---|---|
| 49 to 65 weight % | graphite |
| 5 to 15 weight % | soapstone |
| 25 to 35 weight % | clay |
| 1 to 5 weight % | additives |

## Revendications

1. Mine calcinée destinée à des instruments d'écriture, de dessin et/ou de peinture, constituée au moins d'un liant, d'une substance de charge et d'un agent colorant, ledit liant se présentant sous forme d'argile, et ledit agent colorant étant du graphite, **caractérisée par le fait**
**que** la substance de charge est réalisée sous la forme d'une substance de charge siliceuse exempte de frittage,
**que** ladite substance de charge siliceuse, exempte de frittage, est réalisée sous forme de stéatite,
et **que** ladite mine présente une teneur de
45 à 68 % en poids de graphite
5 à 20 % en poids de stéatite
20 à 40 % en poids d'argile
3 à 8 % en poids d'adjuvants.

2. Mine selon la revendication 1,
**caractérisée par le fait**
**que** ladite mine comprend, de préférence,
de 49 à 65 % en poids de graphite
de 5 à 15% en poids de stéatite
de 25 à 35 % en poids d'argile
de là 5 % en poids d'adjuvants.
